# EUROPEAN PATENT SPECIFICATION

(11) **EP 3 412 787 B1**
(45) Date of publication and mention of the grant of the patent: **06.01.2021**
(21) Application number: 17763067.0
(22) Date of filing: 02.03.2017
(51) Int. Cl.: C22C 38/00, C21D 9/46, C22C 38/06, C22C 38/60, C23C 2/06, C23C 2/26, C23C 2/28, C23C 2/40

(54) **HIGH-STRENGTH THIN STEEL SHEET AND METHOD FOR MANUFACTURING SAME**
HOCHFESTES DÜNNES STAHLBLECH UND VERFAHREN ZUR HERSTELLUNG DAVON
TÔLE D'ACIER MINCE À RÉSISTANCE ÉLEVÉE ET SON PROCÉDÉ DE FABRICATION

(30) Priority: 11.03.2016 JP 2016047815
(43) Date of publication of application: 12.12.2018
(73) Proprietor: JFE Steel Corporation, Tokyo 100-0011 (JP)
(72) Inventor: KIZU Taro, Tokyo 100-0011 (JP)
(74) Representative: Hoffmann Eitle
(86) International application number: PCT/JP2017/008291
(87) International publication number: WO 2017/154727

(56) References cited:
- WO-A1-2010/131303
- WO-A1-2016/021195
- JP-A- 2004 323 951
- JP-A- 2011 021 224
- JP-A- 2014 201 766
- JP-A- 2015 054 983

## Description

### Technical Field

The present invention relates to a high-strength thin steel sheet that has a high yield ratio and excellent formability and that is best suited for, for example, body parts, such as an automobile pillar, side sill, and member; reinforcing parts therefor; and structural parts used for a door impact beam, a vending machine, a desk, electric appliances, office automation equipment, and construction materials, and to a manufacturing method therefor.

### Background Art

In recent years, growing attention to the global environment has increased demands for reduced CO₂ emission. In the automotive field, for example, there is a mounting need for improved fuel efficiency through reduced body weight, as well as for reduced emission. Collision safety is also highly needed. Thinning of structural parts is most effective for reducing automobile weight. In other words, enhanced energy absorption in a collision through increased tensile strength and yield strength of steel sheets that form structural parts is effective for reducing automobile weight while maintaining strength.

As a conventional steel sheet having a high yield ratio, which is a ratio of yield strength to tensile strength, Patent Literature 1 discloses a hot-dip galvanized steel sheet manufactured by hot-rolling steel containing, in mass%, C: 0.07 to 0.25%, Mn: 1.5 to 2.5%, Nb: 0.10% or less, Ti: 0.3% or less, Si: 0.1% or less, Cr: 0.1% or less, P: 0.05% or less, sol. Al: 0.010 to 0.100%, S: 0.01% or less, and N: 0.01% or less; pickling; cold-rolling; then annealing in a continuous hot-dip galvanizing line; and subsequently hot-dip galvanizing; where annealing in a temperature range of 750°C or higher and 880°C or lower is performed for 30 s or more and 90 s or less, and subsequently second annealing of holding in a temperature range of 515°C to 600°C for 15 s or more is performed either before or after, or both before and after the hot-dip galvanizing. Patent Literature 1 also discloses a high-strength high-yield-ratio hot-dip galvanized steel sheet, which is manufactured as described above so as to include a hot-dip galvanized coating or a galvannealed coating, having a tensile strength of 45 kg/mm² or higher and a yield ratio of 80% or higher.

Patent Literature 2 discloses a technique of manufacturing a high-yield-ratio high-tensile-strength cold-rolled steel sheet with excellent formability including: heating to 1,150°C or higher a steel slab containing, in mass%, C ≤ 0.02%, Si ≤ 0.3%, Mn: 0.5 to 2.0%, P ≤ 0.06%, S ≤ 0.005%, Al ≤ 0.06%, N ≤ 0.006%, and Ti: 0.15 to 0.40%; then hot-rolling at a finishing temperature of 880°C or higher; coiling at a coiling temperature of 400°C to 700°C; pickling; cold-rolling; and subsequently annealing at 600°C to 720°C in a carburizing atmosphere.

Patent Literature 3 discloses a technique of manufacturing a high-yield-ratio high-strength cold-rolled steel sheet having a component composition containing, in mass%, C: 0.02 to 0.10%, Si: 1.5% or less, Mn: 1.0 to 2.0%, P: 0.005 to 0.1%, S 0.01% or less, Al: 0.005 to 0.1%, N: 0.01% or less, and Ti: 0.05 to 0.40% and satisfying (Ti/48)/(C/12) = 0.1 to 0.9; and having a microstructure containing ferrite, where the ferrite contains, in area fraction relative to the entire microstructure, 80% or more of crystal grains with an aspect ratio of lower than 3; and 1.0 × 10⁴/mm² or more of a carbide containing Ti (Ti carbide) with a grain size of 20 nm or less is precipitated in the ferrite.

Patent Literature 4 discloses a technique of manufacturing a high-yield-ratio high-strength cold-rolled steel sheet having a yield ratio of higher than 0.70 and lower than 0.83 and a tensile strength of 780 MPa or higher and lower than 900 MPa and containing, in area fraction, 20 to 80% of any of crystal grains with an aspect ratio of 3 or higher oriented in a rolling direction, crystal grains with a grain size of less than 3 µm, and crystal grains with a grain size of less than 3 µm and an aspect ratio of 3 or higher oriented in the rolling direction. The steel sheet is manufactured by heating, to 1,130°C or higher directly or after single-time cooling, a cast slab having a steel component containing, in mass%, C: more than 0.028 and less than 0.044%, Si: less than 0.8%, Mn: 1.9 to 2.3%, P: 0.001 to 0.035%, S 0.0001% to 0.013%, Al: 0.1% or less, N: 0.0001% to 0.008%, Ti: 0.012 to 0.029%, Nb: 0.029 to 0.042%, Mo: 0.05 to 0.25%, and B: 0.0008 to 0.0038%; then hot-rolling at a temperature equal to or higher than the Ar₃ transformation temperature; subsequently removing at a temperature of 750°C or lower; then cold-rolling at a reduction of 35 to 85%; and subsequently continuously annealing at a maximum heating temperature in a temperature range of 740°C or higher and 950°C or lower.

The technique described in Patent Literature 1, however, requires an annealing temperature substantially exceeding 800°C. In addition, an annealing temperature needs to be elevated to 850°C in order to manufacture a high-yield-ratio steel sheet with a yield ratio exceeding 0.90. Accordingly, there is a problem in which such a technique involves operational difficulties, such as increasing heating costs.

The technique described in Patent Literature 2 requires annealing at 600°C to 720°C in a carburizing atmosphere and further annealing at 840°C or higher. Accordingly, there is a problem in which manufacturing costs are increased.

The technique described in Patent Literature 3 requires annealing at 840°C or higher and thus involves a problem in which manufacturing costs are increased.

There is a problem in which the technique described in Patent Literature 4 substantially requires an annealing temperature of 800°C or higher, and the yield ratio is low at less than 0.83.

Patent Literature 5 (PTL 5) describes a hot rolled steel sheet comprising, by mass%, 0.025 to 0.15 % of C, 0.01 to 1.0% or less of Si, 1.0 to 2.5% of Mn, 0.02 % or less of P, 0.005% or less of S, 0.5% or less of Al, 0.04 to 0.10% of Ti, and 0.007% or less of N, as well as Fe and inevitable impurities as the balance, wherein the Mn/Ti ratio is 15 or greater; Nb is not added; the ferrite volume percentage is 30% or greater and the balance comprises one of or both pearlite and bainite; the average aspect ratio of the crystal grain corresponding ellipsoid is 5 or less; the average distribution density on the ferrite grain boundary surface of Ti carbide having a grain size of 20 nm or greater is 10 grains/µm or less; the brittle fracture rate of surface fractured by punching is less than 20%; and the maximum tensile strength is 590 MPa or greater.

### Citation List

### Patent Literature

PTL 1: Japanese Unexamined Patent Application Publication No. 10-273754
PTL 2: Japanese Unexamined Patent Application Publication No. 2007-9253
PTL 3: Japanese Unexamined Patent Application Publication No. 2009-235440
PTL 4: Japanese Patent No. 4436275
PTL 5: WO 2010/131303 A1

### Summary of Invention

### Technical Problem

In view of the above, an object of the present invention is to provide a high-strength thin steel sheet having a high yield ratio and excellent formability and to provide a manufacturing method therefor.

### Solution to Problem

To achieve the above object, extensive research has been conducted. As a result, the following findings were obtained. First, ferrite and bainite that exhibit excellent ductility are set to be the primary phase. Further, by cold-rolling a hot-rolled steel sheet having a small stacking fault energy by addition of Si, cross slip of dislocations to be introduced by cold rolling is suppressed. Consequently, dislocation tangling can be suppressed. During annealing, the microstructure is allowed to be recovered while an aspect ratio of the microstructure, which has been enlarged by cold rolling, is maintained, thereby promoting disappearance of dislocations that have become easily movable without tangling and significantly enhancing ductility while a high yield ratio is maintained. Dislocation tangling herein refers to a state in which a plurality of dislocations are concentrated in one location and such dislocations become difficult to move due to their interactions.

The present invention has been completed on the basis of the above findings and is defined by claims 1-14.

In the present invention, a high-strength thin steel sheet refers to a steel sheet having a tensile strength (TS) of 440 MPa or higher. Examples of such steel sheets include a cold-rolled steel sheet and a steel sheet prepared from a cold-rolled steel sheet through surface treatment, such as a hot-dip coating process, a hot-dip coating process followed by an alloying process, or an electroplating process. Further, such examples also include steel sheets having a coating formed, for example, by chemical conversion treatment of a cold-rolled steel sheet and a surface-treated steel sheet. In the present invention, a high yield ratio refers to a yield ratio (YP/TS) ≥ 0.90. Further, good formability refers to TS × El ≥ 10,000 MPa.

### Advantageous Effects of Invention

According the present invention, a high-strength thin steel sheet having a high yield ratio and excellent formability is obtained. A high-strength thin steel sheet of the present invention having a tensile strength of 440 MPa or higher can enhance ductility while maintaining a high yield ratio of the steel sheet. Accordingly, the high-strength thin steel sheet can suitably be used for applications, such as automobile structural parts, thereby providing industrially beneficial effects.

### Brief Description of Drawings

[Fig. 1] Fig. 1 is a graph showing a relationship between yield ratio and total area fraction of ferrite and bainite.
[Fig. 2] Fig. 2 is a graph showing a relationship between aspect ratio and yield ratio.
[Fig. 3] Fig. 3 is a graph showing a relationship between Si content and formability (TS × El).

### Description of Embodiments

Following, the present invention will be described in detail. Hereinafter, % means mass% unless otherwise indicated.

First, the reasons for limiting the component composition of a high-strength thin steel sheet of the present invention will be described.

### C: 0.04 to 0.25%

C contributes to increased strength of a steel sheet by dissolving in steel. C also contributes to increased strength of a steel sheet through formation of fine carbides and grain refinement of the microstructure. In order to obtain these effects, C content is set to 0.04% or more and preferably 0.07% or more. Meanwhile, a large amount of C promotes formation of martensite, thereby suppressing formation of ferrite and bainite and decreasing the yield ratio. Further, toughness and weldability are impaired. Accordingly, C content is set to 0.25% or less and preferably 0.20% or less.

### Si: 0.5 to 2.0%

The presence of a proper amount of Si in steel can decrease stacking fault energy of steel and suppress cross slip of dislocations, thereby suppressing dislocation tangling during cold rolling. Consequently, ductility can be enhanced while a high yield ratio is maintained. In order to obtain such effects, Si content is set to 0.5% or more, preferably 0.7% or more, and more preferably 1.0% or more. Meanwhile, a large amount of Si induces surface defects, called red scale, during hot rolling, and surface Si oxide severely hinders chemical conversion treatment and the coating process. Accordingly, Si content is set to 2.0% or less and preferably 1.5% or less.

### Mn: 0.1 to 2.0%

Mn can contribute to increased strength of a steel sheet by solid solution strengthening and/or grain refining effects. Further, Mn can suppress the effect of S, which is an impurity element, by fixing S as MnS. In order to obtain such effects, Mn content is set to 0.1% or more, and preferably 0.3% or more. Meanwhile, a large amount of Mn hinders a coating process and promotes formation of martensite, thereby decreasing the yield ratio. Accordingly, Mn content is set to 2.0% or less, preferably 1.5% or less, and more preferably 1.0% or less.

### P: 0.05% or less

P segregates in grain boundaries, thereby impairing ductility and toughness. Further, weldability is also impaired by P. Accordingly, P content is set to 0.05% or less, preferably 0.03% or less, and more preferably 0.01% or less.

### S: 0.030% or less

S significantly decreases ductility of a steel sheet in hot rolling and thus induces hot cracking, thereby degrading surface quality considerably. In addition, S scarcely contributes to increased strength and rather decreases ductility and stretch flangeability through, as an impurity element, formation of coarse sulfides. Further, weldability is also impaired by S. Since these problems become noticeable when S content exceeds 0.030%, S content is preferably decreased as much as possible. Accordingly, S content is set to 0.030% or less, preferably 0.010% or less, more preferably 0.003% or less, and further preferably 0.001% or less.

### Al: 0.10% or less

A large amount of Al results in increased aluminum oxide in steel and thus decreases ductility of a steel sheet. Accordingly, Al content is set to 0.10% or less and preferably 0.06% or less. Although the lower limit is not particularly specified, no problem arises if 0.01% or more of Al is contained as Al-killed steel.

### N: 0.010% or less

If N is contained in a large amount, slab cracking is likely to occur during hot rolling, thereby causing surface defects. Accordingly, N content is set to 0.010% or less, preferably 0.005% or less, more preferably 0.003% or less, and further preferably 0.002% or less.

The balance is iron and incidental impurities. Examples of incidental impurities include Sn, Mg, Co, As, Pb, Zn, Ce, and O, and their total content of 0.5% or less is allowable.

A steel sheet of the present invention can realize intended characteristics by including the above-described essential alloying elements. In addition to the above essential alloying elements, however, the following elements may be added as appropriate in order to enhance strength, yield ratio, and formability.

### One or two or more of Ti, Nb, and V: each 0.01 to 1.0%

Ti, Nb, and V each form fine carbides with C and contribute to increased strength of a steel sheet and an enhanced yield ratio of a steel sheet. In order to obtain such effects, the content of each of Ti, Nb, and V, if contained, is set to 0.01% or more, preferably 0.05% or more, and more preferably 0.10% or more. Meanwhile, Ti, Nb, and/or V, even if contained in a large amount, do not contribute much to increased strength and/or an enhanced yield ratio, but rather significantly increase costs. Accordingly, each of Ti, Nb, and V, if contained, is set to 1.0% or less, preferably 0.8% or less, and more preferably 0.6% or less.

### One or two or more of Mo, Ta, and W: each 0.005 to 1.0%

Mo, Ta, and W can contribute to increased strength of a steel sheet and/or an enhanced yield ratio of a steel sheet through formation of fine precipitates. In order to obtain such effects, the content of each of Mo, Ta, and W, if contained, is set to 0.005% or more and preferably 0.10% or more. Meanwhile, even if Mo, Ta, and/or W are contained in a large amount, not only do the effects level off, but also, costs are increased. Accordingly, each of Mo, Ta, and W, if contained, is set to 1.0% or less and preferably 0.5% or less.

### One or two or more of Cr, Ni, and Cu: each 0.01 to 1.0%

Cr, Ni, and Cu can contribute to increased strength and an enhanced yield ratio of a steel sheet through grain refinement of the microstructure. In order to obtain such effects, the content of each of Cr, Ni, and Cu, if contained, is set to 0.01% or more, preferably 0.1% or more, and more preferably 0.3% or more. Meanwhile, even if Cr, Ni, and/or Cu are contained in a large amount, not only do the effects level off, but also, costs are increased. Accordingly, each of Cr, Ni, and Cu, if contained, is set to 1.0% or less and preferably 0.5% or less.

### B: 0.0002 to 0.0050%

B contributes to increased strength of a steel sheet and an enhanced yield ratio of a steel sheet by promoting grain refinement of the microstructure and/or bainite transformation. In order to obtain such effects, B, if contained, is set to 0.0002% or more, preferably 0.0005% or more, and more preferably 0.0010% or more. Meanwhile, a large amount of B not only complicates rolling due to increased deformation resistance of a steel sheet during hot rolling, but also causes decreased ductility. Accordingly, B, if contained, is set to 0.0050% or less, preferably 0.0030% or less, and more preferably 0.0020% or less.

### One or two of Ca and REM: each 0.0005 to 0.01%

Ca and REM can enhance ductility and/or stretch flangeability by controlling the morphology of sulfides. In order to obtain such effects, the content of each of Ca and REM, if contained, is set to be 0.0005% or more. Meanwhile, even if Ca and/or REM are contained in a large amount, not only do the effects level off, but also, costs are increased. Accordingly, each of Ca and REM, if contained, is set to be 0.01% or less.

### Sb: 0.005 to 0.050%

Since Sb segregates on a slab surface during heating of a slab, nitriding of the slab can be prevented. Consequently, ductility of a steel sheet can be enhanced through suppressed formation of coarse nitrides. In order to obtain such effects, Sb, if contained, is set to 0.005% or more. Meanwhile, addition of Sb in a large amount leads to increased costs. Accordingly, Sb, if contained, is set to 0.050% or less.

Next, the microstructure and the like, which are important requirements for a steel sheet of the present invention, will be described.

### Total area fraction of ferrite and bainite: 90% or more

Ferrite and bainite (tempered ones included) are the important microstructure for achieving high ductility. Accordingly, an area fraction of ferrite and bainite in total is set to 90% or more, preferably 95% or more, more preferably 98% or more, and further preferably 100%. Individual fractions of ferrite and bainite are not specified. It is preferable, however, that the fraction of ferrite is larger. The fraction of ferrite in the entire microstructure is, in area fraction, preferably 90% or more and more preferably 100%. As the microstructure other than ferrite and bainite, pearlite, martensite, retained austenite, and/or cementite, for example, may be contained in each 5% or less and 10% or less in total, if contained. The total area fraction of ferrite and bainite can be measured according to a method described in the Examples section hereinafter. By controlling C amount, Mn amount, and/or manufacturing conditions, especially a coiling temperature, 90% or more of an area fraction of ferrite and bainite in total can be achieved.

### Aspect ratio of ferrite and bainite: 3.0 or higher

By raising the aspect ratio for crystal grains of ferrite and bainite, the strength of a steel sheet and a yield ratio of a steel sheet can be increased. Accordingly, the aspect ratio is set to 3.0 or higher, preferably 4.0 or higher, and more preferably 5.0 or higher. Although the upper limit is not particularly specified, an excessively high aspect ratio results in decreased ductility in some cases. Accordingly, the aspect ratio for crystal grains of ferrite and bainite is preferably 10 or lower. The aspect ratio herein refers to, when an observation surface is set to be a cross-section parallel to the rolling direction, a ratio of an average grain size in the rolling direction to an average grain size in the thickness direction for crystal grains of ferrite and bainite. The average grain size is obtained as an average grain size for both ferrite and bainite phases without distinguishing ferrite and bainite. The aspect ratio of ferrite and bainite can be measured according to a method described in the Examples section hereinafter. The aspect ratio of ferrite and bainite can be controlled, for example, by controlling manufacturing conditions, especially a cold reduction, a soaking temperature, and/or a soaking time.

Next, a manufacturing method for a high-strength thin steel sheet of the present invention will be described. A high-strength thin steel sheet of the present invention can be manufactured by hot-rolling a steel slab having the above-described component composition at a finishing temperature of 800°C or higher and at a coiling temperature of 400°C or higher; pickling; then cold-rolling at a cold reduction of 30 to 80%; and subsequently annealing at a soaking temperature of 650°C to 800°C for a soaking time of 600 s or less. The above method may further comprise, after the finish rolling, slow cooling at a start temperature of 550°C to 750°C and at an average cooling rate of less than 10°C/s for a slow cooling time of 1 to 10 s, and subsequent coiling. In this case, a coiling temperature is not particularly limited, and may be lower than 400°C. Further, a hot-dip coating process or an electroplating process may be performed after the annealing. After the hot-dip coating process, an allowing process at an alloying temperature of 460°C to 600°C for a holding time of 1 s or more may be performed. The thus-obtained high-strength thin steel sheet may be processed at a thickness reduction of 0.1 to 3.0%.

Hereinafter, the details will be described.

In the present invention, a refining method of steel is not particularly limited, and may employ a commonly known refining method in a converter or an electric furnace, for example. In addition, secondary refining may be performed in a vacuum degasser. Subsequently, a slab (steel) is formed by continuous casting in view of productivity and/or quality. A slab may also be formed by commonly known casting method, such as ingot casting-slabbing or thin slab continuous casting.

### Slab after casting

A slab after casting may undergo direct rolling, or reheating of a hot or cold slab to 1,200°C or higher and the subsequent hot rolling. A heating temperature in the reheating is not particularly limited, and is preferably 1,150°C or higher. When a carbide-forming element, such as Ti, Nb, or V is contained, a carbide can also be dissolved by heating to 1,200°C or higher and finely precipitated in the subsequent hot rolling and/or annealing processes. The holding time is not particularly limited, but is preferably 10 minutes or more and more preferably 30 minutes or more. In view of an operational load, the upper limit is preferably 180 minutes or less.

### Finishing temperature: 800°C or higher

When a finishing temperature is low, rolling progresses in the ferrite region and thus tensile strength is decreased by coarsened crystal grains. Since toughness is also decreased significantly, formability of a steel sheet is unsatisfactory. When the non-recrystallized ferrite microstructure is formed, many dislocations remain even after cold rolling and/or annealing and thus formability is decreased greatly. Accordingly, the finishing temperature is set to 800°C or higher and preferably 830°C or higher. Although the upper limit of the finishing temperature is not particularly limited, crystal grains become large at a high temperature, and thus toughness of a steel sheet is decreased. Accordingly, the upper limit is preferably set to 950°C or lower, more preferably 900°C or lower, and further preferably 880°C or lower.

### Coiling temperature: 400°C or higher

When slow cooling described hereinafter is not performed in the cooling process of a steel sheet in the period from the end of finish rolling until coiling, a coiling temperature becomes important in order to obtain desired characteristics of the steel sheet. A low coiling temperature results in martensite transformation, thereby decreasing a yield ratio of the steel sheet. Accordingly, when slow cooling is not performed, the coiling temperature is set to 400°C or higher. Although the upper limit of the coiling temperature is not particularly limited, crystal grains become large at an excessively high temperature. Accordingly, the upper limit is preferably 650°C or lower, more preferably 600°C or lower, and further preferably 550°C or lower. A cooling rate from the end of finish rolling until coiling is not particularly limited. An average cooling rate of 10°C/s or more is sufficient for grain refinement. Meanwhile, excessively rapid cooling requires a special cooling apparatus and thus increases manufacturing costs. Accordingly, an average cooling rate is preferably 10°C/s or more and 100°C/s or less.

### Slow cooling: slow cooling at a start temperature of 550°C to 750°C and at an average cooling rate of less than 10°C/s for a slow cooling time of 1 to 10 s

Ferrite transformation or bainite transformation can be promoted by performing slow cooling after finish rolling. In this case, when a start temperature of slow cooling is high, crystal grains become large. Accordingly, the upper limit of the start temperature is set to 750°C, preferably 700°C or lower, and more preferably 650°C or lower. Meanwhile, when a start temperature of slow cooling is low, ferrite transformation or bainite transformation cannot be promoted. Accordingly, the lower limit of the start temperature is set to 550°C and preferably 600°C or higher. When a cooling rate during slow cooling is fast, ferrite transformation or bainite transformation cannot be promoted. Accordingly, an average cooling rate is set to less than 10°C/s and preferably less than 6°C/s. Although the lower limit of the average cooling rate is not particularly specified, it is preferably 3°C/s or more since crystal grains become large at an extremely slow average cooling rate. Because ferrite transformation or bainite transformation cannot be promoted in a short slow cooling time, a slow cooling time needs to be 1 s or more. Meanwhile, crystal grains become large in a long slow cooling time. Accordingly, the slow cooling time is set to 10 s or less and preferably 5 s or less. When further formability is required, slow cooling is preferably performed. When slow cooling is performed, a coiling temperature during coiling, which is the subsequent step to the slow cooling, is not particularly limited and may be lower than 400°C or higher than 400°C without any problem. Since an excessively high coiling temperature results in large crystal grains, a coiling temperature is preferably 650°C or lower, or equal to or lower than the end temperature of slow cooling. Meanwhile, since an excessively low coiling temperature worsens a coil shape, the lower limit of the coiling temperature is 300°C or higher. An average cooling rate after the end of rolling until the start of slow cooling, as well as an average cooling rate after the end of slow cooling until coiling are not particularly limited. Such an average cooling rate of 10°C/s or more is sufficient for grain refinement. Meanwhile, excessively rapid cooling requires a special cooling apparatus and increases manufacturing costs. Accordingly, the average cooling rate is preferably 10°C/s or more and 100°C/s or less. The start of slow cooling herein refers to the moment when a cooling rate is switched to less than 10°C/s at an optional temperature in the start temperature range of slow cooling (750°C to 550°C).

The reheating temperature after casting described herein refers to a temperature in the central part of a slab. In addition, the finishing temperature, the coiling temperature, the start temperature of slow cooling are each a surface temperature of a steel sheet. Further, the average cooling rate during slow cooling is defined as a surface temperature of a steel sheet.

### Pickling

Pickling may be performed for the thus-obtained steel sheet. A method of pickling is not particularly limited, and may be hydrochloric acid pickling or sulfuric acid pickling. By performing pickling, scale on a steel sheet surface is removed, thereby improving chemical conversion treatment performance and/or coating adhesion. In addition, coating adhesion is enhanced when the subsequent hot-dip coating process or electroplating process is performed.

### Cold reduction: 30 to 80%

A steel sheet after hot rolling and pickling can raise an aspect ratio for crystal grains of ferrite and bainite by cold rolling, and increase the strength of a steel sheet and a yield ratio of a steel sheet by introducing dislocations. In order to obtain such effects, a cold reduction is set to 30% or more, preferably 40% or more, and more preferably 50% or more. Meanwhile, a large cold reduction results in an increased rolling load. Accordingly, a cold reduction is set to 80% or less, preferably 70% or less, and more preferably 60% or less. The cold reduction refers to a ratio of a thickness of a steel sheet after cold rolling to a thickness of the steel sheet after pickling.

### Soaking temperature: 650°C to 800°C

In a steel sheet after completing cold rolling, the microstructure is recovered through annealing. When a soaking temperature is low during annealing, the microstructure cannot be recovered and thus ductility of a steel sheet is decreased. Accordingly, the lower limit of the soaking temperature is set to 650°C and preferably 700°C or higher. Meanwhile, recrystallization progresses at a high soaking temperature, thereby significantly decreasing the strength of a steel sheet and a yield ratio of a steel sheet. Accordingly, the upper limit of the soaking temperature is 800°C and preferably 780°C.

### Soaking time: 600 s or less

When a soaking time during annealing is long, recrystallization progresses, and thus an aspect ratio of crystal grains becomes low. Further, strength of a steel sheet and a yield ratio of a steel sheet are decreased. Accordingly, a soaking time is set to 600 s or less, preferably 300 s or less, and more preferably 100 s or less. The lower limit is not particularly set, but is preferably 1 s or more.

Although an average heating rate to the soaking temperature during annealing is not particularly limited, 1°C/s or more is preferable in view of productivity. Since rapid heating requires special equipment, the upper limit of the heating rate is preferably 100°C/s or less. Although an average cooling rate from the soaking temperature is not particularly limited, 1°C/s or more is preferable in view of productivity. Since rapid cooling requires special equipment, the upper limit of the cooling rate is 100°C/s or less if cooling is performed by a common gas cooling, for example. Meanwhile, when cooling is performed after the end of annealing, cementite may be precipitated by holding at 200°C to 450°C for 30 to 600 s during the cooling.

Since the material properties of a high-strength thin steel sheet of the present invention are not affected by a coating process or the composition of a coating bath, a hot-dip galvanizing process, a galvannealing process, or an electroplating process, for example, can be performed as a coating process.

### Hot-dip coating process (preferable condition)

When a hot-dip coating process is performed, a steel sheet is immersed in a coating bath during cooling after annealing. For example, in a case of a hot-dip galvanizing process, a galvanizing bath is preferably at 420°C to 500°C. Zinc does not melt in a galvanizing bath at lower than 420°C. Meanwhile, galvannealing progresses excessively in a galvanizing bath at higher than 500°C.

### Galvannealing process at a galvannealing temperature of 460°C to 600°C for a holding time of 1 s or more after a hot-dip galvanizing process (preferable condition)

A galvannealed steel sheet can be formed by reheating to 460°C to 600°C after the hot-dip galvanizing process and holding at the reheating temperature for 1 s or more. A reheating temperature of lower than 460°C results in unsatisfactory galvannealing. Meanwhile, galvannealing progresses excessively at a reheating temperature exceeding 600°C, and thus a coating becomes brittle. Accordingly, the reheating temperature is preferably 570°C or lower. Meanwhile, a holding time of less than 1 s results in unsatisfactory galvannealing. Although the upper limit of the holding time is not particularly set, it is preferably 10 s or less since long-time holding results in coarsened precipitates.

### Electroplating process

A zinc coating, a composite coating of zinc and Al, a composite coating of zinc and Ni, an Al coating, a composite coating of Al and Si can be formed on a steel sheet surface by an electroplating process.

### Processing at a thickness reduction of 0.1 to 3.0%

A yield ratio of a steel sheet can be enhanced through general processing of a high-strength thin steel sheet obtained as described above. In order to obtain such an effect, general processing is performed at a thickness reduction of 0.1% or more. More preferably, a thickness reduction is 0.3% or more. Meanwhile, a large thickness reduction results in decreased ductility of a steel sheet. Accordingly, when general processing is performed, a thickness reduction is preferably set to 3.0% or less, more preferably 2.0% or less, and further preferably 1.0% or less. General processing herein may be applying of reduction to a steel sheet by a rolling roller or imparting of tension to a steel sheet by pulling. Further, general processing may be combined processing of rolling and pulling.

A high-strength thin steel sheet of the present invention is manufactured as described above. In the foregoing, the finishing temperature and the coiling temperature are each set to be a temperature on a steel sheet surface. The average cooling rate when slow cooling is performed is defined on the basis of a temperature on a steel sheet surface. The reheating temperature is set to be a temperature on a steel sheet surface. Meanwhile, in a high-strength thin steel sheet of the present invention, strength of the steel sheet is not decreased even upon reheating to 800°C or lower. Accordingly, the steel sheet may be reheated to 800°C or lower and then hot-pressed for stamping of components. Although the thickness is not particularly limited, the present invention exerts advantageous effects particularly in the manufacture of thin sheets. Accordingly, the thickness is 2.0 mm or less, preferably 1.6 mm or less, more preferably 1.2 mm or less, and most preferably 1.0 mm or less.

### EXAMPLES

Molten steel having the component composition shown in Table 1 was refined and continuously cast by a typical and commonly known technique to manufacture steel slabs. Under manufacturing conditions shown in Table 2, these slabs were hot-rolled, and then the resulting hot-rolled steel sheets were cold-rolled and annealed to yield cold-rolled steel sheets.

The slabs were soaked at 1,250°C for 30 minutes, and then hot-rolled. A cooling rate after hot rolling was 30°C/s in average when slow cooling was not performed, and 30°C/s before and after slow cooling when slow cooling was performed. Pickling was performed at a hydrochloric acid concentration of 10% in mass% and at a temperature of 80°C. Cooling was performed at 10°C/s in average after cold rolling and annealing. A coating process was performed for some slabs.

Sample Nos. 3 to 7, 9, 10, 13, 14, and 17 were held at 350°C for 180 s during cooling after annealing and then cooled with air. Sample No. 12 was immersed in a galvanizing bath at 470°C during cooling after annealing and then cooled with air. Sample Nos. 1, 2, 8, 11, 15, and 16 were immersed in a galvanizing bath at 470°C during cooling after annealing, then reheated at 550°C for 1 s (galvannealing process), and cooled with air. Sample No. 10 was electrogalvanized after annealing.

Test pieces each taken from the thus-obtained high-strength thin steel sheets were tested as described below and evaluated. In the case of coated steel sheets, steel sheets after the respective coating processes were tested and evaluated.

### Total area fraction of ferrite and bainite

A surface parallel to the thickness direction and the rolling direction as an observation surface was embedded, polished, and etched with Nital. On the observation surface, a 100 × 100 µm region centered on a 1/4 thickness portion was imaged by a scanning electron microscope (SEM) at a magnification of 1000×. Three images for such a region were taken for one specimen. A total area fraction was obtained through image processing of such SEM images. A total area fraction is an average value of area fractions obtained from three images.

### Aspect ratio for crystal grains of ferrite and bainite

A specimen was taken by cutting such that a cross-section parallel to the rolling direction became an observation surface, embedded, polished, etched with Nital, and then electron backscatter diffraction (EBSD) pattern measurement was performed at a measurement step of 0.1 µm for a 1/4 thickness portion of the specimen. Misorientation of 15° or more was set to be a grain boundary. Three 100 × 100 µm regions were measured for one specimen and output. Nineteen straight lines parallel to each of the thickness direction and the rolling direction were drawn at regular intervals for each output region, and an each average grain size in the thickness direction and in the rolling direction was obtained by an intercept method. Three data was averaged as an average grain size for a specimen. A ratio of an average grain size in the rolling direction to an average grain size in the thickness direction was set to be an aspect ratio.

### Mechanical characteristics

The steel sheets were each cut to a JIS No. 5 test piece with a direction orthogonal to the rolling direction as a longitudinal direction, and tensile tests were performed according to JIS Z 2241 to obtain yield strength YP (MPa), tensile strength TS (MPa), and total elongation El (%). Upper yield point was set to be yield strength for a specimen with yield point elongation, whereas 0.2% proof strength was set to be yield strength for a specimen without yield point elongation. A yield ratio was calculated as YP/TS. Tests were performed for two specimens and their average values were regarded as mechanical characteristic values of a steel sheet. In the case of YP/TS ≥ 0.90, yield ratio is evaluated to be high, and in the case of TS × El ≥ 10,000 (MPa·%), formability is evaluated to be good. The results obtained as described above are shown in Table 3.

**[Table 1]**

| Sample No. | Chemical composition (mass%) | | | | | | | |
|---|---|---|---|---|---|---|---|---|
| | C | Si | Mn | P | S | Al | N | Others |
| 1 | 0.04 | 1.2 | 1.8 | 0.02 | 0.002 | 0.04 | 0.003 | |
| 2 | 0.07 | 1.8 | 0.2 | 0.05 | 0.005 | 0.05 | 0.005 | B:0.0014 |
| 3 | 0.05 | 0.9 | 1.9 | 0.01 | 0.001 | 0.07 | 0.006 | Ti:0.20, B:0.0014 |
| 4 | 0.20 | 0.7 | 0.4 | 0.03 | 0.002 | 0.06 | 0.006 | Mo:0.2 |
| 5 | 0.26 | 1.3 | 1.0 | 0.01 | 0.002 | 0.05 | 0.003 | Ti:0.05 |
| 6 | 0.16 | 1.0 | 0.5 | 0.01 | 0.001 | 0.05 | 0.004 | Ti:0.07, V:0.50 |
| 7 | 0.13 | 0.7 | 1.5 | 0.02 | 0.001 | 0.05 | 0.005 | Ti:0.05, V:0.25, Sb:0.010 |
| 8 | 0.15 | 1.0 | 0.6 | 0.02 | 0.001 | 0.04 | 0.009 | V:0.20, B:0.0013, Ca:0.003 |
| 9 | 0.08 | 0.6 | 0.7 | 0.02 | 0.028 | 0.07 | 0.004 | Ti:0.10, Nb:0.05, V:0.05, Mo:0.08, |
| | | | | | | | | Ta:0.02, W:0.04, Cr:0.08, Ni:0.07, |
| | | | | | | | | Cu:0.11, B:0.0020, Sb:0.009, Ca:0.005, |
| | | | | | | | | REM:0.003 |
| 10 | 0.24 | 0.9 | 0.1 | 0.01 | 0.001 | 0.08 | 0.002 | Cr:0.05, Cu:0.08, Ni:0.06 |
| 11 | 0.08 | 1.2 | 1.0 | 0.03 | 0.004 | 0.06 | 0.004 | V:0.25, Cr:0.31 |
| 12 | 0.07 | 0.8 | 1.0 | 0.01 | 0.001 | 0.03 | 0.005 | Ti:0.05, Nb:0.05, B:0.0015 |
| 13 | 0.08 | 1.2 | 0.8 | 0.01 | 0.005 | 0.06 | 0.001 | Ti:0.11, Cr:0.21 |
| 14 | 0.11 | 2.0 | 0.4 | 0.03 | 0.008 | 0.04 | 0.004 | Nb:0.07, V:0.41, Ca:0.004 |
| 15 | 0.15 | 0.4 | 0.6 | 0.02 | 0.003 | 0.04 | 0.005 | |
| 16 | 0.15 | 1.4 | 0.6 | 0.01 | 0.015 | 0.06 | 0.005 | V:0.35 |
| 17 | 0.14 | 1.2 | 2.1 | 0.01 | 0.001 | 0.05 | 0.004 | Ti:0.10, V:0.12 |

**[Table 2]**

| Sample No. | Hot rolling | | | | | Cold rolling | Annealing | | Coating^{*1)} | Thickness reduction (%) |
|---|---|---|---|---|---|---|---|---|---|---|
| | Finishing temperature (°C) | Start temperature of slow cooling (°C) | Cooling rate in slow cooling (°C/s) | Slow cooling time (s) | Coiling temperature (°C) | Cold reduction (%) | Soaking temperature (°C) | Soaking time (s) | | |
| 1 | 880 | - | - | - | 400 | 70 | 650 | 550 | GA | 0.1 |
| 2 | 820 | - | - | - | 650 | 50 | 680 | 150 | GA | - |
| 3 | 880 | - | - | - | 600 | 40 | 760 | 80 | - | 2.5 |
| 4 | 810 | - | - | - | 600 | 30 | 710 | 150 | - | 0.5 |
| 5 | 830 | - | - | - | 600 | 60 | 720 | 150 | - | 0.1 |
| 6 | 850 | - | - | - | 500 | 50 | 750 | 30 | - | - |
| 7 | 920 | - | - | - | 450 | 50 | 740 | 120 | - | - |
| 8 | 860 | - | - | - | 600 | 25 | 740 | 80 | GA | - |
| 9 | 850 | - | - | - | 500 | 50 | 780 | 30 | - | 1.2 |
| 10 | 930 | - | - | - | 550 | 40 | 730 | 120 | Electrogalvanized Zn | - |
| 11 | 860 | 600 | 4 | 2 | 400 | 60 | 750 | 100 | GA | - |
| 12 | 830 | - | - | - | 450 | 60 | 680 | 300 | GI | - |
| 13 | 900 | - | - | - | 550 | 50 | 810 | 60 | - | - |
| 14 | 900 | 550 | 4 | 3 | 300 | 55 | 740 | 130 | - | - |
| 15 | 860 | - | - | - | 550 | 50 | 700 | 50 | GA | - |
| 16 | 860 | 650 | 5 | 1 | 450 | 60 | 790 | 10 | GA | - |
| 17 | 850 | 600 | 4 | 3 | 450 | 50 | 750 | 50 | - | - |

| | | | | | | | | | | |
|---|---|---|---|---|---|---|---|---|---|---|
| *1) GI: hot-dip galvanized steel sheet, GA: Galvannealed steel sheet | | | | | | | | | | |

**[Table 3]**

| Sample No. | Microstructure | | Mechanical characteristic value | | | | | | Note |
|---|---|---|---|---|---|---|---|---|---|
| | Area fraction of ferrite and bainite (%) | Aspect ratio | Thickness (mm) | YP (MPa) | TS (MPa) | El (%) | Yield ratio | TS×EI (MPa·%) | |
| 1 | 100 | 12.0 | 0.8 | 470 | 480 | 21 | 0.98 | 10080 | Example |
| 2 | 96 | 4.6 | 1.2 | 580 | 620 | 20 | 0.94 | 12400 | Example |
| 3 | 100 | 3.5 | 2.0 | 800 | 820 | 17 | 0.98 | 13940 | Example |
| 4 | 93 | 3.1 | 2.2 | 680 | 720 | 15 | 0.94 | 10800 | Example |
| 5 | 88 | 7.3 | 1.4 | 530 | 620 | 19 | 0.85 | 11780 | Comparative Example |
| 6 | 100 | 5.2 | 1.4 | 1230 | 1250 | 12 | 0.98 | 15000 | Example |
| 7 | 95 | 4.6 | 1.6 | 940 | 980 | 14 | 0.96 | 13720 | Example |
| 8 | 97 | 2.8 | 1.8 | 790 | 900 | 14 | 0.88 | 12600 | Comparative Example |
| 9 | 95 | 4.6 | 1.6 | 920 | 960 | 14 | 0.96 | 13440 | Example |
| 10 | 90 | 3.5 | 1.6 | 500 | 550 | 19 | 0.91 | 10450 | Example |
| 11 | 98 | 7.1 | 1.4 | 970 | 1000 | 14 | 0.97 | 14000 | Example |
| 12 | 96 | 7.3 | 1.4 | 650 | 680 | 18 | 0.96 | 12240 | Example |
| 13 | 98 | 2.4 | 1.6 | 680 | 830 | 22 | 0.82 | 18260 | Comparative Example |
| 14 | 94 | 5.6 | 1.2 | 970 | 1050 | 13 | 0.92 | 13650 | Example |
| 15 | 89 | 4.5 | 1.2 | 480 | 530 | 17 | 0.91 | 9010 | Comparative Example |
| 16 | 92 | 7.5 | 1.0 | 950 | 1020 | 13 | 0.93 | 13260 | Example |
| 17 | 86 | 5.0 | 1.4 | 780 | 950 | 13 | 0.82 | 12350 | Comparative Example |

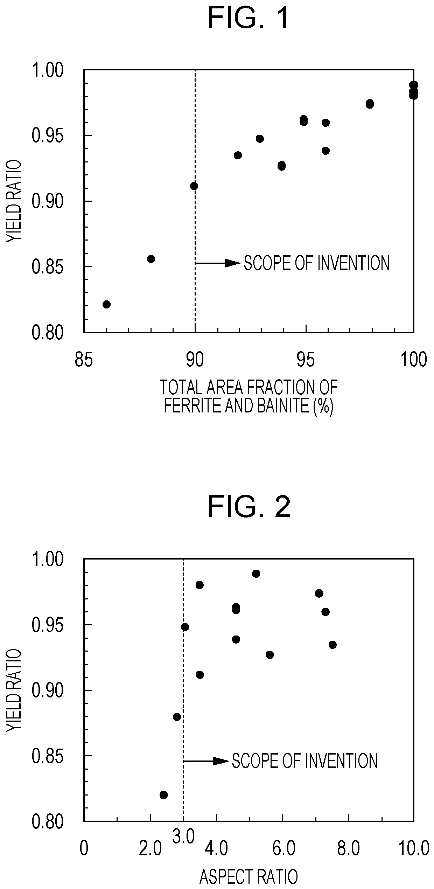

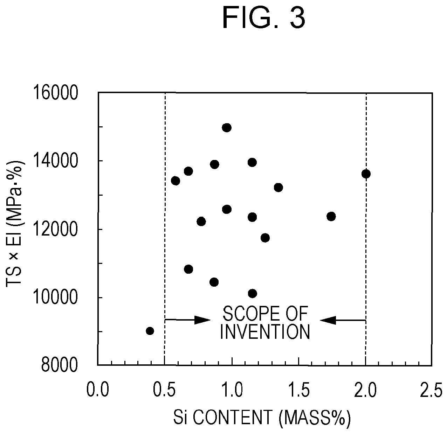

Table 3 reveals that high-strength thin steel sheets having a high yield ratio and excellent formability were obtained for Examples. Fig. 1 shows a relationship between yield ratio and total area fraction of ferrite and bainite. Fig. 2 shows a relationship between yield ratio and aspect ratio. Fig. 3 shows a relationship between Si content and formability (TS × El) Fig. 1 reveals that a yield ratio of 0.90 or higher can be achieved by setting a total area fraction of ferrite and bainite to 90% or more. Fig. 2 reveals that a yield ratio of 0.90 or higher can be achieved by setting an aspect ratio to 3.0 or higher. Fig. 3 reveals that TS × El of 10,000 (MPa·%) or more can be achieved by setting a Si content to 0.5 to 2.0%.

## Claims

1. A high-strength cold-rolled thin steel sheet which is optionally surface treated and has
a tensile strength of 440 MPa or higher;
a thickness of 2.0 mm or less;
a component composition containing, in mass%,
C: 0.04 to 0.25%,
Si: 0.5 to 2.0%,
Mn: 0.1 to 2.0%,
P: 0.05% or less,
S: 0.030% or less,
Al: 0.10% or less,
N: 0.010% or less,
optionally 0.01 to 1.0% of each of one or two or more of Ti, Nb, and V,
optionally 0.005 to 1.0% of each of one or two or more of Mo, Ta, and W,
optionally 0.01 to 1.0% of each of one or two or more of Cr, Ni, and Cu,
optionally 0.0002 to 0.0050% of B,
optionally 0.0005 to 0.01% of each of one or two of Ca and REM, and
optionally 0.005 to 0.050% of Sb,
with the balance being iron and incidental impurities; and
a microstructure containing, in area fraction, 90% or more of ferrite and bainite in total, wherein
ferrite and bainite each have an aspect ratio of 3.0 or higher.

2. The high-strength cold-rolled thin steel sheet according to Claim 1, wherein the component composition contains, in mass%, 0.01 to 1.0% of each of one or two or more of Ti, Nb, and V.

3. The high-strength cold-rolled thin steel sheet according to Claim 1 or 2, wherein the component composition contains, in mass%, 0.005 to 1.0% of each of one or two or more of Mo, Ta, and W.

4. The high-strength cold-rolled thin steel sheet according to any one of Claims 1 to 3, wherein the component composition contains, in mass%, 0.01 to 1.0% of each of one or two or more of Cr, Ni, and Cu.

5. The high-strength cold-rolled thin steel sheet according to any one of Claims 1 to 4, wherein the component composition contains, in mass%, 0.0002 to 0.0050% of B.

6. The high-strength cold-rolled thin steel sheet according to any one of Claims 1 to 5, wherein the component composition contains, in mass%, 0.0005 to 0.01% of each of one or two of Ca and REM.

7. The high-strength cold-rolled thin steel sheet according to any one of Claims 1 to 6, wherein the component composition contains, in mass%, 0.005 to 0.050% of Sb.

8. The high-strength cold-rolled thin steel sheet according to any one of Claims 1 to 7, having a coated layer on a steel sheet surface.

9. A method of manufacturing a cold-rolled high-strength thin steel sheet as defined in any one of Claims 1 to 7, comprising:
hot-rolling including finish rolling a steel slab having the component composition according to any one of Claims 1 to 7 at a finishing temperature of 800°C or higher;
coiling;
pickling; then
cold-rolling at a cold reduction of 30 to 80%; and subsequently
annealing at a soaking temperature of 650°C to 800°C for a soaking time of 600 s or less,
wherein, after the finish rolling, the method optionally further comprises slow cooling at a start temperature of 550°C to 750°C and at an average cooling rate of less than 10°C/s for a slow cooling time of 1 to 10 s, and
wherein the coiling temperature is 400°C or higher when slow cooling is not performed.

10. The method of manufacturing a high-strength cold-rolled thin steel sheet according to Claim 9, further comprising a coating process for the high-strength thin steel sheet.

11. The method of manufacturing a high-strength cold-rolled thin steel sheet according to Claim 10, wherein the coating process is a hot-dip coating process which is performed after the annealing.

12. The method of manufacturing a high-strength cold-rolled thin steel sheet according to Claim 11, wherein the hot-dip coating process is a hot-dip galvanizing process, the method further comprising a galvannealing process at a galvannealing temperature of 460°C to 600°C for a holding time of 1 s or more after the hot-dip galvanizing process.

13. The method of manufacturing a high-strength cold-rolled thin steel sheet according to Claim 10, wherein the coating process is an electroplating process which is performed after the annealing.

14. The method of manufacturing a high-strength cold-rolled thin steel sheet according to any one of Claims 9 to 13, comprising processing at a thickness reduction of 0.1 to 3.0% after any of the coiling, the annealing, the hot-dip coating process, the galvannealing process, and the electroplating process.

## Patentansprüche

1. Hochfestes kaltgewalztes dünnes Stahlblech, das gegebenenfalls oberflächenbehandelt ist und
eine Zugfestigkeit von 440 MPa oder höher;
eine Dicke von 2,0 mm oder weniger;
eine Komponentenzusammensetzung, in Massen-%, enthaltend C: 0,04 bis 0,25%,
Si: 0,5 bis 2,0%,
Mn: 0,1 bis 2,0%,
P: 0,05% oder weniger,
S: 0,030% oder weniger,
Al: 0,10% oder weniger,
N: 0,010% oder weniger,
gegebenenfalls 0,01 bis 1,0% von jeweils einem oder zwei oder mehreren aus Ti, Nb und V,
gegebenenfalls 0,005 bis 1,0% von jeweils einem oder zwei oder mehreren aus Mo, Ta und W,
gegebenenfalls 0,01 bis 1,0% von jeweils einem oder zwei oder mehreren aus Cr, Ni und Cu,
gegebenenfalls 0,0002 bis 0,0050% B,
gegebenenfalls 0,0005 bis 0,01% von jeweils einem oder zwei aus Ca und SEM und
gegebenenfalls 0,005 bis 0,050% Sb,
wobei der Rest Eisen und zufällige Verunreinigungen sind; und
eine Mikrostruktur aufweist, die, bezogen auf den Flächenanteil, insgesamt 90% oder mehr Ferrit und Bainit enthält, worin
Ferrit und Bainit jeweils ein Aspektverhältnis von 3,0 oder höher aufweisen.

2. Hochfestes kaltgewalztes dünnes Stahlblech gemäß Anspruch 1, worin die Komponentenzusammensetzung, in Massen-%, 0,01 bis 1,0% von jeweils einem oder zwei oder mehreren aus Ti, Nb und V enthält.

3. Hochfestes kaltgewalztes dünnes Stahlblech gemäß Anspruch 1 oder 2, worin die Komponentenzusammensetzung, in Massen-%, 0,005 bis 1,0% von jeweils einem oder zwei oder mehreren aus Mo, Ta und W enthält.

4. Hochfestes kaltgewalztes dünnes Stahlblech gemäß mindestens einem der Ansprüche 1 bis 3, worin die Komponentenzusammensetzung, in Massen-%, 0,01 bis 1,0% von jeweils einem oder zwei oder mehreren aus Cr, Ni und Cu enthält.

5. Hochfestes kaltgewalztes dünnes Stahlblech gemäß mindestens einem der Ansprüche 1 bis 4, worin die Komponentenzusammensetzung, in Massen-%, 0,0002 bis 0,0050% B enthält.

6. Hochfestes kaltgewalztes dünnes Stahlblech gemäß mindestens einem der Ansprüche 1 bis 5, worin die Komponentenzusammensetzung, in Massen-%, 0,0005 bis 0,01% von jeweils einem oder zwei aus Ca und SEM enthält.

7. Hochfestes kaltgewalztes dünnes Stahlblech gemäß mindestens einem der Ansprüche 1 bis 6, worin die Komponentenzusammensetzung, in Massen-%, 0,005 bis 0,050% Sb enthält.

8. Hochfestes kaltgewalztes dünnes Stahlblech gemäß mindestens einem der Ansprüche 1 bis 7, das eine Überzugsschicht auf einer Stahlblechoberfläche aufweist.

9. Verfahren zur Herstellung eines kaltgewalzten hochfesten dünnen Stahlblechs wie in einem der Ansprüche 1 bis 7 definiert, umfassend:
das Warmwalzen, einschließlich Endwalzen, einer Stahlbramme mit der Komponentenzusammensetzung gemäß mindestens einem der Ansprüche 1 bis 7 bei einer Endtemperatur von 800°C oder höher;
das Aufrollen;
das Beizen; dann
das Kaltwalzen bei einer Kaltreduktion von 30 bis 80%; und anschließend
das Glühen bei einer Einweichtemperatur von 650°C bis 800°C für eine Einweichzeit von 600 s oder weniger,
worin das Verfahren, nach dem Endwalzen, gegebenenfalls ferner langsames Abkühlen bei einer Starttemperatur von 550°C bis 750°C und einer durchschnittlichen Abkühlgeschwindigkeit von weniger als 10°C/s für eine Zeit des langsamen Abkühlens von 1 bis 10 s umfasst und
worin die Aufrolltemperatur 400°C oder höher beträgt, wenn langsames Abkühlen nicht durchgeführt wird.

10. Verfahren zur Herstellung eines hochfesten kaltgewalzten dünnen Stahlblechs gemäß Anspruch 9, ferner umfassend einen Beschichtungsprozess für das hochfeste dünne Stahlblech.

11. Verfahren zur Herstellung eines hochfesten kaltgewalzten dünnen Stahlblechs gemäß Anspruch 10, worin der Beschichtungsprozess ein Schmelztauchbeschichtungsprozess ist, der nach dem Glühen durchgeführt wird.

12. Verfahren zur Herstellung eines hochfesten kaltgewalzten dünnen Stahlblechs gemäß Anspruch 11, worin der Schmelztauchbeschichtungsprozess ein Schmelztauchgalvanisierungsprozess ist, wobei das Verfahren nach dem Schmelztauchgalvanisierungsprozess ferner einen Galvanoglühprozess bei einer Galvanoglühtemperatur von 460°C bis 600°C für eine Haltezeit von 1 s oder mehr umfasst.

13. Verfahren zur Herstellung eines hochfesten kaltgewalzten dünnen Stahlblechs gemäß Anspruch 10, worin der Beschichtungsprozess ein Elektroplattierungsprozess ist, der nach dem Glühen durchgeführt wird.

14. Verfahren zur Herstellung eines hochfesten kaltgewalzten dünnen Stahlblechs gemäß mindestens einem der Ansprüche 9 bis 13, umfassend das Verarbeiten bei einer Dickenreduktion von 0,1 bis 3,0% nach einem aus dem Aufrollen, dem Glühen, dem Schmelztauchbeschichtungsprozess, dem Galvanoglühprozess und dem Elektroplattierungsprozess.

## Revendications

1. Feuille d'acier fine roulée à froid à haute résistance qui est optionnellement traitée sur sa surface et a
une résistance à la traction de 440 MPa ou supérieure ; une épaisseur de 2,0 mm ou moins ;
une composition de composants, en % en masse,
C : 0,04 à 0,25%,
Si : 0,5 à 2,0%,
Mn : 0,1 à 2,0%,
P : 0,05% ou moins,
S : 0,030% ou moins,
Al : 0,10% ou moins,
N : 0,010% ou moins,
optionnellement de 0,01 à 1,0% de chacun d'un ou deux ou plus de Ti, Nb, et V,
optionnellement de 0,005 à 1,0% de chacun d'un ou deux ou plus de Mo, Ta, et W,
optionnellement de 0,01 à 1,0% de chacun d'un ou deux ou plus de Cr, Ni, et Cu,
optionnellement de 0,0002 à 0,0050% de B,
optionnellement de 0,0005 à 0,01% de chacun d'un ou deux de Ca et REM, et
optionnellement de 0,005 à 0,050% de Sb,
avec le reste étant du fer et des impuretés incidentelles ; et
une microstructure contenant, dans une fraction d'aire, 90% ou plus de ferrite et de bainite en total, dans laquelle
la ferrite et la bainite ont chacune un rapport d'aspect de 3,0 ou supérieur.

2. La feuille d'acier fine roulée à froid à haute résistance selon la revendication 1, dans laquelle la composition de composants contient, en % en masse, de 0,01 à 1,0% de chacun d'un ou deux ou plus de Ti, Nb, et V.

3. La feuille d'acier fine roulée à froid à haute résistance selon la revendication 1 ou 2, dans laquelle la composition de composants contient, en % en masse, de 0,005 à 1,0% de chacun d'un ou deux ou plus de Mo, Ta, et W.

4. La feuille d'acier fine roulée à froid à haute résistance selon l'une quelconque des revendications 1 à 3, dans laquelle la composition de composants contient, en % en masse, de 0,01 à 1,0% de chacun d'un ou deux ou plus de Cr, Ni, et Cu.

5. La feuille d'acier fine roulée à froid à haute résistance selon l'une quelconque des revendications 1 à 4, dans laquelle la composition de composants contient, en % en masse, de 0,0002 à 0,0050% de B.

6. La feuille d'acier fine roulée à froid à haute résistance selon l'une quelconque des revendications 1 à 5, dans laquelle la composition de composants contient, en % en masse, de 0,0005 à 0,01% de chacun d'un ou deux de Ca et REM.

7. La feuille d'acier fine roulée à froid à haute résistance selon l'une quelconque des revendications 1 à 6, dans laquelle la composition de composants contient, en % en masse, de 0,005 à 0,050% de Sb.

8. La feuille d'acier fine roulée à froid à haute résistance selon l'une quelconque des revendications 1 à 7, ayant une couche de revêtue sur une surface de feuille d'acier.

9. Procédé de fabrication d'une feuille d'acier fine roulée à froid à haute résistance telle que définie dans l'une quelconque des revendications 1 à 7, comprenant :
le laminage à chaud comportant le laminage de finition d'un brame d'acier ayant la composition de composants selon l'une quelconque des revendications 1 à 7 à une température de finition de 800°C ou supérieure ;
le refroidissement ;
le décapage ; ensuite
le laminage à froid à une réduction à froid de 30 à 80% ; et subséquemment
le recuit à une température de trempage de 650°C à 800°C pendant un temps de trempage de 600 s ou moins,
dans lequel, après le laminage de finition, le procédé optionnellement comprend en outre un refroidissement lent à une température de 550°C à 750°C et à une vitesse de refroidissement moyenne inférieure à 10°C/s pendant un temps de refroidissement lent de 1 à 10 s, et
dans lequel la température de refroidissement est de 400°C ou supérieure lorsque le refroidissement lent n'est pas réalisé.

10. Le procédé de fabrication d'une feuille d'acier fine roulée à froid à haute résistance selon la revendication 9, comprenant en outre un procédé de revêtement pour la feuille d'acier fine à haute résistance.

11. Le procédé de fabrication d'une feuille d'acier fine roulée à froid à haute résistance selon la revendication 10, dans lequel le procédé de revêtement est un procédé de revêtement par trempage à chaud qui est réalisé après le recuit.

12. Le procédé de fabrication d'une feuille d'acier fine roulée à froid à haute résistance selon la revendication 11, dans lequel le procédé de revêtement par trempage à chaud est un procédé de galvanisation par trempage à chaud, le procédé comprenant en outre un procédé de recuit-galvanisation à une température de recuit-galvanisation de 460°C à 600°C pendant un temps de maintien de 1 s ou plus après le procédé de galvanisation par trempage à chaud.

13. Le procédé de fabrication d'une feuille d'acier fine roulée à froid à haute résistance selon la revendication 10, dans lequel le procédé de revêtement est un procédé de galvanoplastie qui est réalisé après le recuit.

14. Le procédé de fabrication d'une feuille d'acier fine roulée à froid à haute résistance selon l'une quelconque des revendications 9 à 13, comprenant le traitement à une réduction d'épaisseur de 0,1 à 3,0% après l'un quelconque du refroidissement, du recuit, du procédé de revêtement par trempage à chaud, du procédé de recuit-galvanisation, et du procédé de galvanoplastie.
